Europäisches Patentamt

European Patent Office

Office européen des brevets

(19)

(11) Publication number: **0 345 749**
**A2**

(12) **EUROPEAN PATENT APPLICATION**

(21) Application number: **89110276.6**

(22) Date of filing: **07.06.89**

(51) Int. Cl.⁴: **G01D 5/245**

(30) Priority: **09.06.88 JP 142245/88**
**13.06.88 JP 145179/88**
**13.06.88 JP 145180/88**

(43) Date of publication of application:
**13.12.89 Bulletin 89/50**

(84) Designated Contracting States:
**DE FR GB**

(71) Applicant: **MITSUBISHI DENKI KABUSHIKI KAISHA**
**2-3, Marunouchi 2-chome Chiyoda-Ku Tokyo(JP)**

(72) Inventor: **Kajiwara, Yasuya**
**c/o Mitsubishi Denki K.K. Himeji Seisakusho**
**840 Chiyoda-cho Himeji Hyogo(JP)**

(74) Representative: **Lehn, Werner, Dipl.-Ing. et al**
**Hoffmann, Eitle & Partner Patentanwälte**
**Arabellastrasse 4**
**D-8000 München 81(DE)**

(54) **Digital deviation sensor.**

(57) A digital deviation sensor device comprises a sensor for producing an electric pulse signal according to rotation of a movable member, a counter (2) for counting the pulse signals, a memory (3) for storing a count obtained and outputting a stored data serially upon an external clock signal and a timing signal forming circuit (4) responsive to an external trigger signal for producing a timing signal upon which the count is transferred to the memory (3) which clears the content of the counter (2), wherein the device is integrated into substantially a single semiconductor and an amount of deviation in a certain direction is detected digitally.

*FIG. 1*

EP 0 345 749 A2

## DIGITAL DEVIATION SENSOR

BACKGROUND OF THE INVENTION

The present invention relates to a deviation sensor device and, particularly, to a digital deviation sensor for digitally measuring an amount of deviation of a movable member.

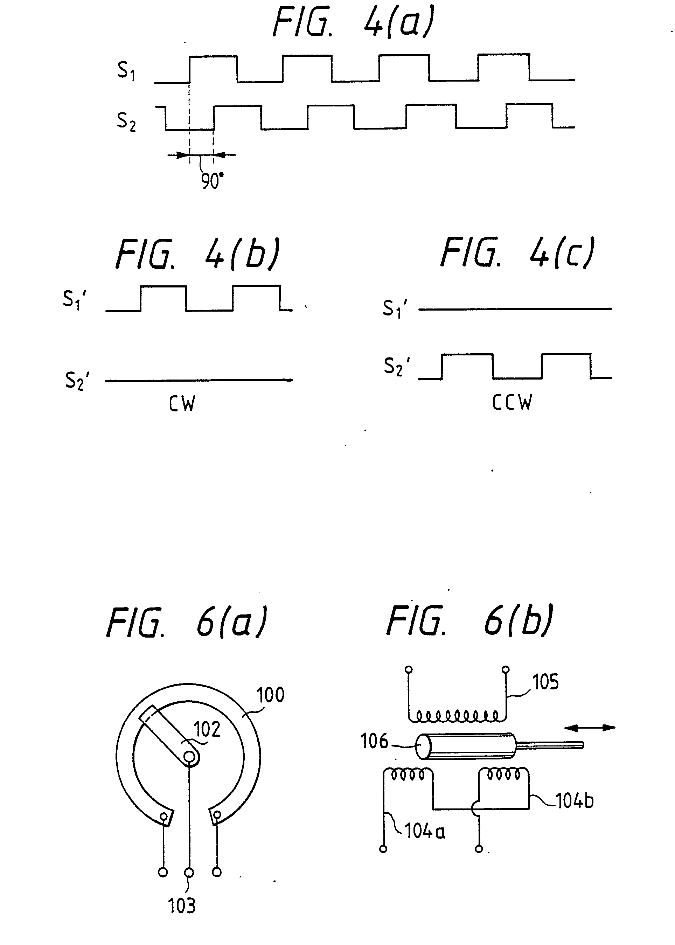

As a conventional deviation sensor, there is a deviation sensor such as shown in Fig. 6a, in which a phenomenon is used that, when a slider 102 ganged with a movable member moves on a resistive sheet 100 of resin dispersed with carbon black across which a predetermined voltage is applied, a voltage is produced at a terminal 103 of the slider 102 which is proportional to an amount of deviation of the member.

Further, as a non-contact type deviation sensor, one called differential transformer type and shown in Fig. 6b is known in which a magnetic coupling between a primary coil 105 and differentially wound secondary coils 104a and 104b is changed by moving a magnetic member 106 of such as ferrite and a voltage corresponding to an amount of deviation thereof is obtained across opposite ends of the secondary coils 104a and 104b.

An operation of the differential transformer type deviation sensor shown in Fig. 6b will be described in detail. When an a.c. voltage is applied to the primary coil 105, a voltage is produced in the second coils 104a and 104b which is a difference between voltages induced in the coils 104a and 104b. However, since the magnetic coupling therebetween is changed according to a position of the magnetic member 106, the voltage across the secondary coils 104a and 104b is changed. When the magnetic member 106 is positioned at a center, voltages in the respective secondary coils 104a and 104b are equal and, thus, the output voltage thereof becomes zero. When the magnetic member 106 deviates from the center position to the side of the secondary coil 104a, the induction voltage in the side of the secondary coil 104b becomes higher, phase of the induced voltage in the secondary coil being reversed. Therefore, by synchroneously rectifying the voltages induced in the secondary coil 104a and the secondary coil 104b by taking phase into consideration, it is possible to obtain an output voltage which is positive when the magnetic member 106 deviates toward the secondary coil 104a and negative when it is moved toward the secondary coil 104b.

Since the conventional deviation sensor is constructed as mentioned above and is of an analog type, the sensor is subjected to drift due to temperature and changes of offeset and gain with time. Further, the size thereof is relatively large and circuit construction for processing analog signals is complicated.

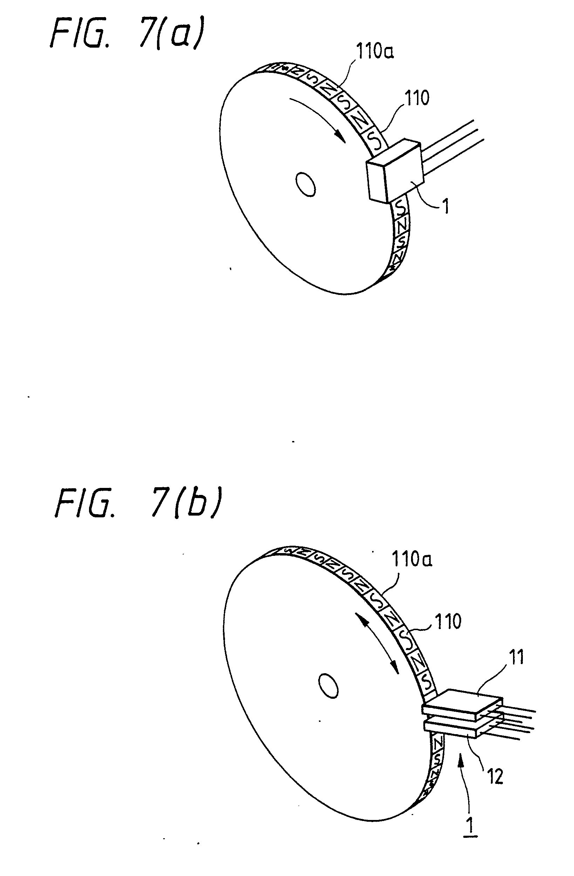

In another conventional sensor for detecting rotation used in such as rotary encoder, a Hall or magnetic resistance element 1 for detecting magnetism is used as shown in Fig. 7a or, as shown in Fig. 7b, a pair of such elements 11 and 12 are used.

In Fig. 7a, a magnetic circular disc 110 has a permanent magnet 110a provided on a periphery thereof. The magnet 110a has a plurality of S and N poles arranged alternatively and, when the disc is rotated, an electric pulse output is produced in a magnetism detecting element 1 provided in facing relation to magnetic poles of the magnetic disc 110. In Fig. 7b, the magnetism detecting element 1 comprises a first and a second magnetism detecting elements 11 and 12 which produce a pair of pulse trains upon rotation of the disc which are different in phase by $90^{\circ}$.

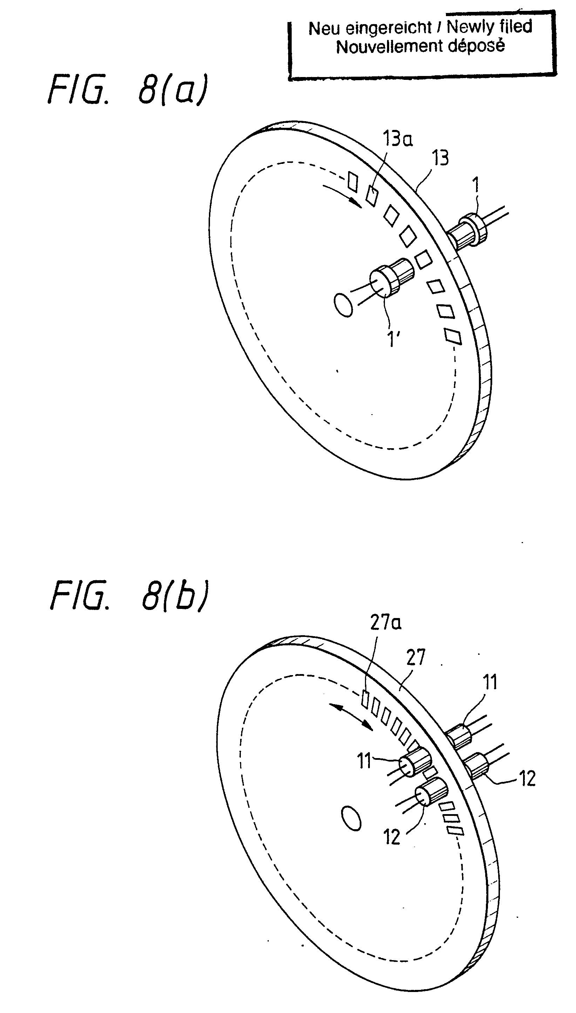

In Fig. 8a, a light emissive element 14 is arranged on one side of a slit disc 127 having a number of slits 127a along an outer periphery thereof and a light receiving element $1'$ is arranged on the other side such that, when the slit disc 127 rotates, light from the light emissive element 1 reaches the light receiving element $1'$ through the respective silts 127a upon which a pulse signal is produced by the light receiving element $1'$.

In Fig. 8b, two pairs of such photo emissive elements and light receiving elements are arranged to produce two pulse trains as in the Fig. 7b.

In the conventional sensor, the signal produced is either inputted directly to a controller or indirectly through an amplifier circuit or a waveshaper circuit. In such system, it tends to be influenced by noise and, when the inputted signal is supplied to, for example, an interrupt terminal of a microcomputer, signal processing to be performed by the latter becomes excessive, resulting in a delay of a main processing thereof.

SUMMARY OF THE INVENTION

An object of the present invention is to provide a rotation sensor device which is hardly influenced by noise and does not disturb the main processing of such microcomputer, by pretreating pulse signal produced in the side of the sensor.

Another object of the present invention is to provide a deviation sensor which is of digital type and compact, facilitates a signal conversion with respect to a microcomputer, is hardly influenced by noise, is exchangeable with conventional analog deviation sensor by a conversion of an output into an analog value and has an improved reliability.

A deviation sensor device according to the present invention comprises a sensor portion for producing an electric pulse signal according to rotation of a shaft, counting means for counting said pulse signals, memory means for storing a count obtained and outputting a stored data serially upon an external clock signal and means responsive to an external trigger signal for producing a timing signal upon which the count is transferred to said memory means to clear the content of said counting means, wherein said rotation sensor device is integrated into substantially a single semiconductor.

Therefore, it is possible to obtain data of the movable member without giving an influence to a micro processor of an external controller.

Further, since signals in the deviation sensor device is processed within the same semiconductor, it is relatively insensitive to external noise.

When the sensor portion is capable of producing two electric pulse signals having different phases according to deviation of a movable member and the counter means comprises an up/down counter means for counting said pulse signals according to phase, it is possible to obtain a direction and an amount of deviation as a digital signal which is not outputted directly but counted by the up/down counter according to its phase. The counter data is sent from the memory portion to the side of controller according to an instruction from the controller. Therefore, a signal exchange between a microcomputer as the controller is facilitated and effect of noise becomes negligible. Further, since the deviation amount is digitally measured, effects of drift due to temperature and change of gain with time are reduced.

With a D/A converter means for converting the count result into an analog value, an exchangeability with the conventional deviation sensor is provided and the reliability is improved.

## BRIEF DESCRIPTION OF THE DRAWING

Fig. 1 is a block diagram of a device according to a first embodiment of the present invention;

Fig. 2 is a block diagram of a device according to a second embodiment of the present invention;

Fig. 3 is a construction of a digital deviation sensor according to a third embodiment of the present invention;

Figs. 4a, 4b and 4c show waveforms showing an output signal of the sensor portion and a signal after processed;

Fig. 5 is a construction of a digital deviation sensor according to a fourth embodiment of the present invention;

Figs. 6a and 6b are illustrations of conventional deviation sensors;

Figs. 7a and 7b show other examples of the conventional sensors; and

Figs. 8a and 8b show further examples of the conventional sensors.

## DETAILED DESCRIPTION OF THE PREFERRED EMBODIMENTS

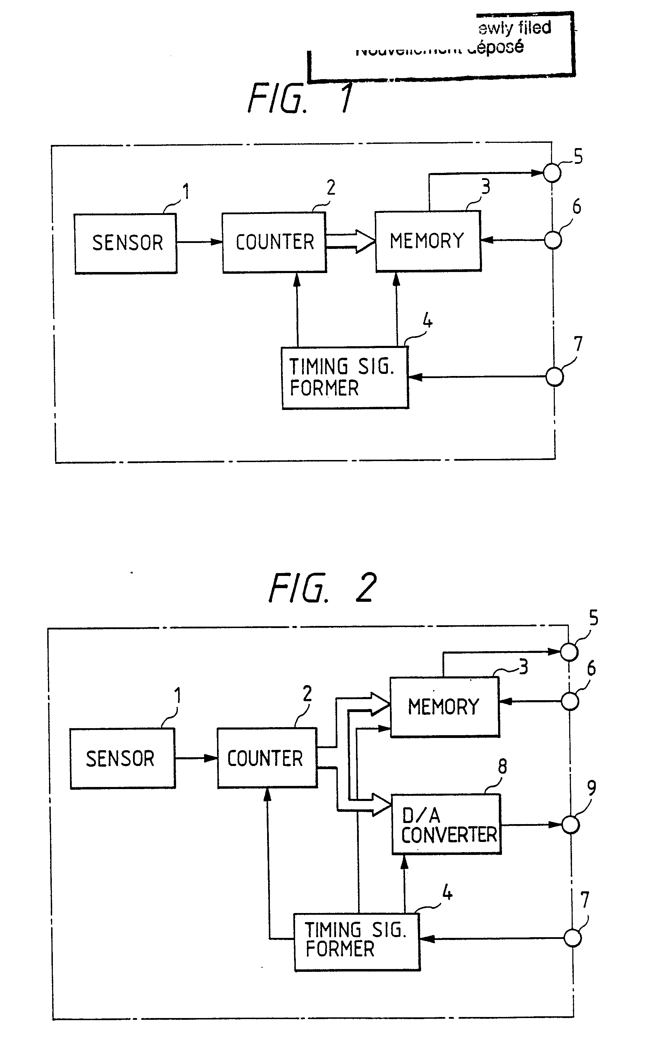

Embodiments of the present invention will be described with reference to Figs. 1 to 5.

In Fig. 1, a reference numeral 1 depicts a known sensor portion which detects rotation of a rotary member and produces an electric pulse signal corresponding thereto. The sensor 1 may be that shown in Fig. 7a or Fig. 8a. A counter portion 2 wave-shapes the pulse signal produced in the sensor portion 1 and counts its number. A memory portion 3 stores a content of the counter portion 2. The memory portion 3 may comprise a shift register circuit having parallel inputs and a serial output. A a timing signal forming portion 4 responds to an external trigger pulse signal supplied to a terminal 7 to transfer the data of the counter portion 2 to the memory portion 3, then to clear the counter portion 2 and to perform a switching between an switch input and an output terminals 5 and 6 of the memory portion 3.

The sensor is connected to an external controller (not shown) by the terminals 5, 6 and 7, the terminal 5 being the serial output terminal for memory data, the terminal 6 being a clock signal input terminal from the controller, the terminal 7 being a trigger signal input terminal. Although not shown, the sensor has a power source terminal.

The rotation sensor device having a construction mentioned above is substantially integraded into a single semiconductor.

In operation, the sensor portion 1 detects rotation of a movable member and produces a pulse signal. The pulse signal is sent to the counter portion 2. The counter portion 2 comprises an up-counter which counts the number of pulses of the pulse signal. When a trigger pulse signal is supplied from the controller to the terminal 7, the counting operation of the counter portion 2 is temporally stopped by a timing signal from the timing signal forming portion 4 and the latter produces a timing signal for transfer of the data of the counter portion 2 to the memory portion 3. When the data is latched in the memory portion 3, an operation of the latter is switched to a serial mode and the timing signal forming portion 4 outputs the timing signal for clearing the counter portion 2 and for restarting its counting operation.

Therefore, the counter portion 2 counts pulse signals produced by the sensor portion 2 during a time interval of the trigger pulse and transfers a result to the memory portion 3. The memory portion 3 outputs the content of the data serially from the terminal 5 upon the clock signal inputted to the clock signal input terminal 6. The controller responds to this output signal to calculate a rotational speed of the rotary member.

With this construction, with the counter portion 2 and the memory portion 3 being of, for example, 16 bits, respectively, it is possible to receive up to about 64,000 pulses as only 16 output pulses when the controller requires them, so that it is possible to reduce a load on the controller. Further, since the output pulse can be obtined reliably with low impedance, it is hardly be influenced by noise.

Fig. 2 shows a second embodiment of the present invention, in which same reference numerals as those used in Fig. 1 depict same or corresponding portions, respectively, and details thereof are omitted. A D/A converter circuit is provided for latching the content of the counter portion 2 according to an instruction of a timing signal forming portion 4 and converting a digital content of the counter into an analog value. A terminal 9 is a terminal from which the analog value after D/A converted is outputted. The timing signal forming portion 4 has, in addition to the above mentioned function, the same function as that of the timing signal forming portion of the first embodiment. The rotation sensor device having the above construction is substantially integrated into a single semiconductor.

In the following description of operation of the second embodiment, portions which are described with respect to the first embodiment are omitted. Upon the timing signal outputted from the timing signal forming portion 4 upon a trigger pulse signal supplied through the terminal 7, the data in the counter portion 2 is transferred to the memory portion 3 and to the data latch portion of the D/A converter circuit 8 and outputted at the terminal 9 as an analog value. Further, thetiming signal forming portion 4A clears the counter portion 2 after a transfer of the data of the counter portion 2 to the memory and the D/A converter.

According to the second embodiment, it is possible, in addition to the effect obtainable by the first embodiment, to record the digital data on a recorder, etc., as analog value.

Although, in the second embodiment, the content of the counter portion is D/A converted by the D/A converter circuit, the content of the memory portion may be converted into an analog value.

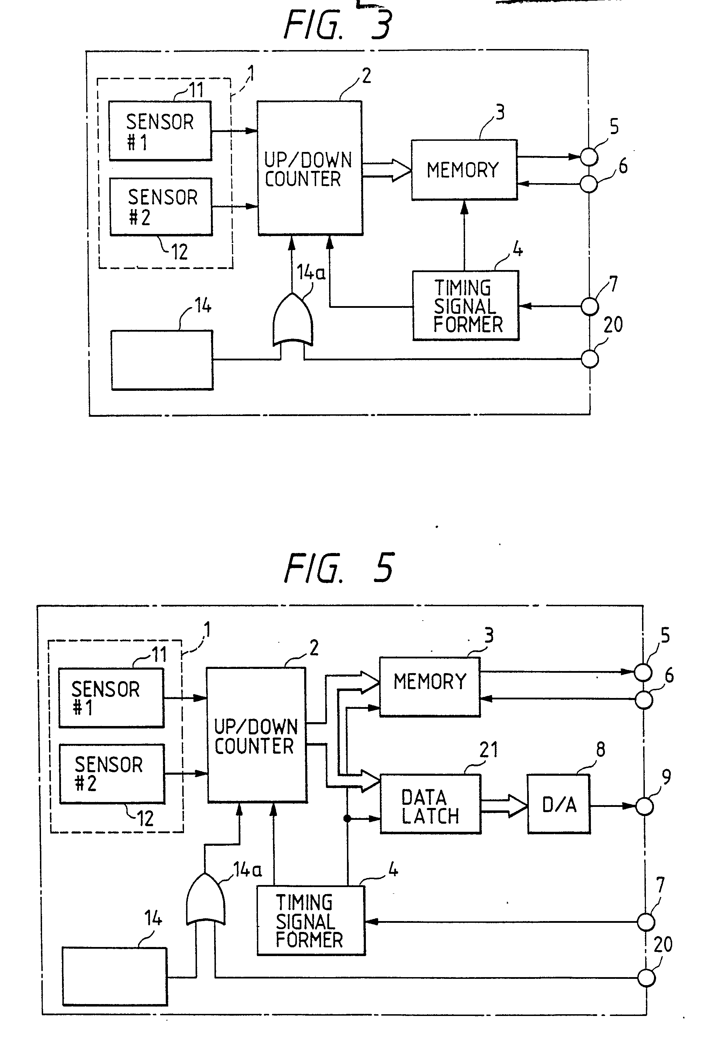

In Fig. 3 which shows a third embodiment of the present invention, a sensor 1 comprises a first sensor portion 11 and a second sensor portion 12 which may be the magnetism detecting elements shown in Fig. 7b or the photo detecting elements shown in Fig. 8b, which are arranged such that output pulse signals S1 and S2 shown in Fig. 4a and having a phase difference of 90° are produced thereby.

A counter 2, in this embodiment, is an up/down counter responsive to the output signals of the first and second sensor portions 11, 12 for counting pulses from either of the sensor portions according to a direction of deviation of the movable member and the amount thereof. The up/downcounter portion 2 has a function to convert the output signal S1 of the first sensor portion 11 into a signal $S1'$ and the output signal S2 of the second sensor portion 12 into a signal $S2'$ immediately before counting thereof, on the basis of the output signals S1, S2 of the first and second sensor portions 11, 12, so that only pulses from either of the latters are counted.

A reference signal generator portion 14 is connected through an OR circuit 14a to the up/down counter portion 2. A memory 3 is constructed with, for example, shift registers, which functions to store a content of the up/down counter 2 transferred thereto according to an external instruction and to output it serially according to a switch instruction. A timing signal forming portion 4 is supplied externally with a trigger signal, an output side of which is connected to the up/down counter portion 2 and the memory portion 3. An output terminal 5 is connected to the memory portion 3 and a clock signal input terminal 6 is connected to the memory portion 3. A trigger signal input terminal 7 is connected to the timing signal forming portion 4. A reference signal input terminal 20 is connected to the input terminal of the OR circuit 14a, these terminals 5, 6, 7 and 20 being connected to a controller(not shown). The deviation sensor constructed as mentioned above is integrated on a single semiconductor.

In operation, the first and the second sensor portiuons 11, 12 produce, upon a deviation of the movable member, pulse signals S1 and S2 whose phases are different from each other by about 90° as shown in Fig. 4a. In a case where a direction of deviation of the movable member is clockwise, the signal S1 advances in phase by 90° with respect to the signal S2 and, when it is counterclockwise, the phase relation is reversed. The up/down counter portion 2 responds to the phases of the output signals S1 and S2 of the first and the second sensor portions 11, 12 to count the numbers of pulses of either S1 or S2. For example, the up/down counter portion 2 processes the signals S1 and S2 to obtain signals $S1'$ and $S2'$ as shown in Fig. 4b to count the output pulses S1 of the first sensor portion 11 when the deviation is clockwise direction and, as shown in Fig. 4c, to count the output pulses S2 of the second sensor portion 12 when the deviation is in counterclockwise direction. Thus, the output of up/down counter portion 2 can indicate the direction of deviation and an amount of deviation. The up/down counter portion 13 is cleared by the reference signal from the reference signal generator portion 14 or the refrence signal supplied to the reference signal input terminal 20 from the controller through the OR circuit 14a at a time when the movable member reaches the reference position, so that it is cleared every time the member passes through the reference position. The timing signal forming portion 4 responds to the trigger signal supplied by the controller through the trigger signal input terminal 7 to switch an operation of the memory portion 3 to a parallel data input mode, to temporarily stop the counting operation of the up/down counter portion 2 and to transfer the content of the up/down counter portion 2 to the memory portion 3 simultaneously and then to switch the operation of the memory portion 3 so that it can provide a serial output. The memory portion 3 is supplied with the clock signal from the clock signal input terminal 6 and provides at the output terminal 5 the stored data in synchronism with the clock signal as a serial pulse train. By receiving this pulse train, the controller can read a deviation.

Such digital deviation sensor responds to an instruction in the form of trigger signal from the controller to provide the data thereto, in easily readable form.

As the first and the second sensor portions 11 and 12, it is, of course, possible to use the sensor shown in Fig. 7b or Fig. 8b.

Fig. 5 shows a fourth embodiment of the present invention, which is similar to the third embodiment shown in Fig. 3 except that a data latch portion 21 connected to the up/down counter portion 2 and a D/A converter 22 are further provided. An analog output of the D/A converter 22 is provided at an analog output terminal 9. The data latch portion 21 is in parallel to the memory 3 and its operation is also timed by the timing signal from the timing signal forming portion 4. The deviation sensor according to this embodiment is integrated on a single semiconductor.

In operation, the content of the up/down counter portion 2 is delivered to both the memory 3 and the data latch portion 21 in response to the reference signal from the reference signal generator portion 14 or the reference signal from the controller.

With the D/A conversion, an exchangeability with the analog deviation sensor of the conventional system is given with high reliability.

Although, in the above embodiments, the rotational deviation has been described, the present invention is also applicable to a linear deviation with the same effect as mentioned previously.

As mentioned above, according to the present invention in which the pulse signal from the sensor portion is not inputted directly to the microcomputer but preprocessed by the counting means and the memory means such as shift register as memory portion which are integrally formed with the sensor portion, the load on the microcomputer is reduced and the data can be read at any convenient timing. Further, it is possible to obtain stable signal and therefore there is substantially no error due to noise.

Further, with the sensor portion which produces two pulse signals upon deviation of the movable member, the up/down counter portion for counting the number of the pulse signals, the memory portion for storing the counting and the timing signal forming portion for producing a transfer instruction and a switching instruction being integrated on a single semiconductor, the sensor device is compact, hardly be influenced by noise or aging, provides a simplified signal exchange with a microcomputer.

Further, with the provision of the D/A conversion means for converting the counting into an analog value and the timing signal forming portion for producing a transfer instruction and a switching instruction which is also integrated on a single semiconductor, the sensor device can provide a exchangeability with a conventional analog deviation sensor.

## Claims

1. A digital deviation sensor device comprising a sensor means (1) for producing an electric pulse signal according to rotation of a movable member (110), counting means (2) for counting said pulse signals, memory means (3) for storing a content of said counting means (2) in parallel and outputting a stored data serially upon an external clock signal and means (4) responsive to an external trigger signal for producing a timing signal upon which the content of said counting means (2) is transferred to said memory means (3) and said counting means (2) is cleared, said sensor means (1), said counting means (2), said memory means (3) and said timing signal forming means (4) being integrated in substantially a single semiconductor, whereby an amount of deviation of a movable member (110) in a certain direction is detected digitally.

2. The digital deviation sensor device as claimed in claim 1, further comprising a D/A converter (8) arranged in parallel to said memory means (3) for converting the content of said counting means (2) into an analog value.

3. The digital deviation sensor device as claimed in claim 1, further comprising a D/A converter for converting an output of said memory means (3) into an analog value.

4. The digital deviation sensor as claimed in claim 1, wherein said sensor means (1) comprises a first sensor portion (11) and a second sensor portion (12) for producing two electric pulse signals different in phase according to a direction of deviation of said movable member (110), and wherein said counting means (2) comprises an up/down counter (2) for counting said pulse signals according to phase, whereby a direction and an amount of deviation of said movable member (10) are detected.

5. The digital deviation sensor as claimed in claim 4, further comprising a D/A converter (8) for converting the content of said counting means (2) into an analog value.

6. The digital deviation sensor device as claimed in claim 4, further comprising a D/A converter for converting an output of said memory means (3) into an analog value.

7. The digital deviation sensor device as claimed in claim 5, further comprising a latch circuit portion (21) provided between said counting means (2) and said D/A converter (8) for latching the content of said counting means (2) for a D/A conversion.

ewly filed
Nouvellement déposé

*FIG. 1*

SENSOR 1 → COUNTER 2 → MEMORY 3 → 5
MEMORY ← 6
TIMING SIG. FORMER 4 ← 7

*FIG. 2*

SENSOR 1 → COUNTER 2 → MEMORY 3 → 5
MEMORY ← 6
COUNTER → D/A CONVERTER 8 → 9
TIMING SIG. FORMER 4 ← 7

FIG. 3

FIG. 5

# FIG. 4(a)

$S_1$

$S_2$

$90°$

# FIG. 4(b)

$S_1'$

$S_2'$

CW

# FIG. 4(c)

$S_1'$

$S_2'$

CCW

# FIG. 6(a)

100

102

103

# FIG. 6(b)

105

106

104a

104b

FIG. 7(a)

FIG. 7(b)

EP 0 345 749 A2

FIG. 8(a)

13a
13
1
1'

FIG. 8(b)

27a
27
11
11
12
12